# EUROPEAN PATENT SPECIFICATION

(11) **EP 0 809 780 B1**
(45) Date of publication and mention of the grant of the patent: **12.12.2001**
(21) Application number: 95939634.2
(22) Date of filing: 26.10.1995
(51) Int. Cl.: F41G 1/40, F41G 3/22, G02B 5/04, G02B 23/04, G02B 23/08, G03B 13/08, G11B 7/00, G01D 5/30, G02B 27/64, G02B 17/02

(54) **COMPACT KEPLERIAN TELESCOPE**
Kompaktes Keplersches Teleskop
TELESCOPE KEPLERIEN COMPACT

(30) Priority: 27.10.1994 IL 11142794
(43) Date of publication of application: 03.12.1997
(73) Proprietor: Netzer, Yishay, 20142 Doar Na Misgav (IL)
(72) Inventor: Netzer, Yishay, 20142 Doar Na Misgav (IL)
(74) Representative: Modiano, Guido, Dr.-Ing.
(86) International application number: US9513970
(87) International publication number: WO9613695

(56) References cited:
- GB-A- 1 516 799
- US-A- 3 051 046
- US-A- 3 409 343
- US-A- 3 947 095
- US-A- 4 013 340
- US-A- 4 131 333
- US-A- 4 563 061
- US-A- 4 576 449
- US-A- 4 673 262
- US-A- 5 130 855
- PATENT ABSTRACTS OF JAPAN vol. 015, no. 055 (P-1164), 8 February 1991 & JP 02 284113 A (CANON INC), 21 November 1990,
- PATENT ABSTRACTS OF JAPAN vol. 016, no. 117 (P-1328), 24 March 1992 & JP 03 287109 A (MINOLTA CAMERA CO LTD), 17 December 1991,
- PATENT ABSTRACTS OF JAPAN vol. 016, no. 117 (P-1328), 24 March 1992 & JP 03 287108 A (MINOLTA CAMERA CO LTD), 17 December 1991,
- PATENT ABSTRACTS OF JAPAN vol. 016, no. 252 (P-1367), 9 June 1992 & JP 04 058216 A (SANPEI GOTO), 25 February 1992,
- THOMAS W STONE: "Hybrid Diffractive-Refractive telescope" PROCEEDINGS OF THE SPIE, vol. 1212, 1990, pages 257-266, XP002072444

## Description

### FIELD AND BACKGROUND OF THE INVENTION

The present invention relates to optical devices and means for magnifying vision, more particularly, to telescopes, binoculars, telemagnifiers (binoculars that are closely focused to, and converge at a short distance), and the like. A Keplerian telescope comprises a positive objective lens group, hereinafter referred as "the objective lens", and a positive eyepiece lens group, hereinafter referred as "the eyepiece lens". In a typical telescope the objective and eyepiece lens groups produce an inverted image which require additional means for producing an erected image. The means for erecting the image commonly comprise a system of mirrors, prisms, or combination of both. It is well known to those skilled in the art that an image erection system should include an odd number of reflections in each one of the two perpendicular axes.

Patent documents US 3 409 343, GB 1 516 799 and US 4 131 333 all disclose relevant prior art. The most common image erection system, used in field binoculars, employs the Porro-prism system or its light-weight mirror equivalent which is described in US 4,488,790. Both of said Porro-prism systems have no mechanical left-right symmetry, and when a symmetry is desired one of several prism systems known in the art which typically include even number of planar reflectors in the plane of symmetry, and a single roof-reflector is usually employed. Typical examples are the Hensolt prism shown in Fig. la, and the Schmidt prism shown in Fig. lb. A telescope employing a Schmidt prism is described in US 4,795,235. Such telescope is relatively compact, however, since the Schmidt prism has no hollow equivalent it is relatively heavy for a given objective lens diameter. Another major disadvantage of a telescope of this type is the fact that the eyepiece and objective lenses are mounted at a relative angle of roughly 40° between them. An additional drawback is the fact that the focal length of the objective lens is severely restricted for a given objective lens aperture, resulting in a relatively small F/# (the ratio between the focal length and the diameter of a lens). It is well known in the art that for a given set of system parameters the complexity of the optical design needed to achieve a given level of image aberration corrections is very dependent on the F/#. As a result, the number of optical elements needed for the objective and eyepiece lens groups with a small F/# is increasingly large - which impairs the compactness.

### OBJECT OF THE INVENTION

It was found that advantage can be taken of the cone shape of the light bundle emerging from a Keplerian telescope objective lens, in particular when its F/# is close to 3, by folding it in a manner analogous to that of the Hensolt prism. In contrast with the Schmidt prism that is inherently solid, relying on the total internal reflection, the present layout can be implemented by mirrors only, in order to decrease the total weight of the device. In addition, the angle between the optical axes of the eyepiece and objective lenses is optional. A Keplerian telescope including this optical structure seems to achieve the ultimate compactness possible for a given objective lens diameter, without compromising any performance parameter. This telescope may be used for compact monoculars, binoculars and, in particular, head-mounted binoculars and telemagnifiers.

It is an object of the invention to overcome the large size and relatively heavy weight limitations of the existing prior art telescopes by providing an alternative new, compact, and lightweight telescope structure.

It is another object of the invention to enable the use of the telescopes in some new applications, and to make the use of telescopes easier and more convenient in other existing applications.

It is another object of the invention to provide compactness in size and reduced weight without compromising any performance requirement.

It is another object of the invention to provide said adaptations to telescopes, monoculars, binoculars, and head-mounted telemagnifiers.

### SUMMARY OF THE INVENTION

The invention comprises a telescopic device for magnifying images as defined by claim 1.

A device according to a preferred embodiment of the invention has a first optical axis which is parallel to the second optical axis. According to another embodiment of the invention the device has a second optical axis which is tilted by about 20° with respect to the first optical axis in order to provide a simultaneous view of the magnified and natural view.

According to another preferred embodiment of the invention, the optical components and the device housing are made from lightweight materials, and adapted to be head-mounted.

According to any embodiment of the invention, the optical components may include diffractive elements, the eyepiece lens of the device may have a substantially rectangular shape. Further, focusing means may be provided. Said focusing means may comprise at least one laterally moving reflector. Further, the focusing means are hermetically sealed.

A still another preferred embodiment of the invention may include means for compensating for accidental image jitters comprises pivot mechanism for at least oneplane mirror, at least one angular inertial sensor mounted on the telescope envelope, and a servo system for adjusting the plane mirror according to the data received from said inertial sensor, Said servo system comprises two electromagnetic actuators, and two capacitive deflection sensing means.

### BRIEF DESCRIPTION OF THE DRAWINGS

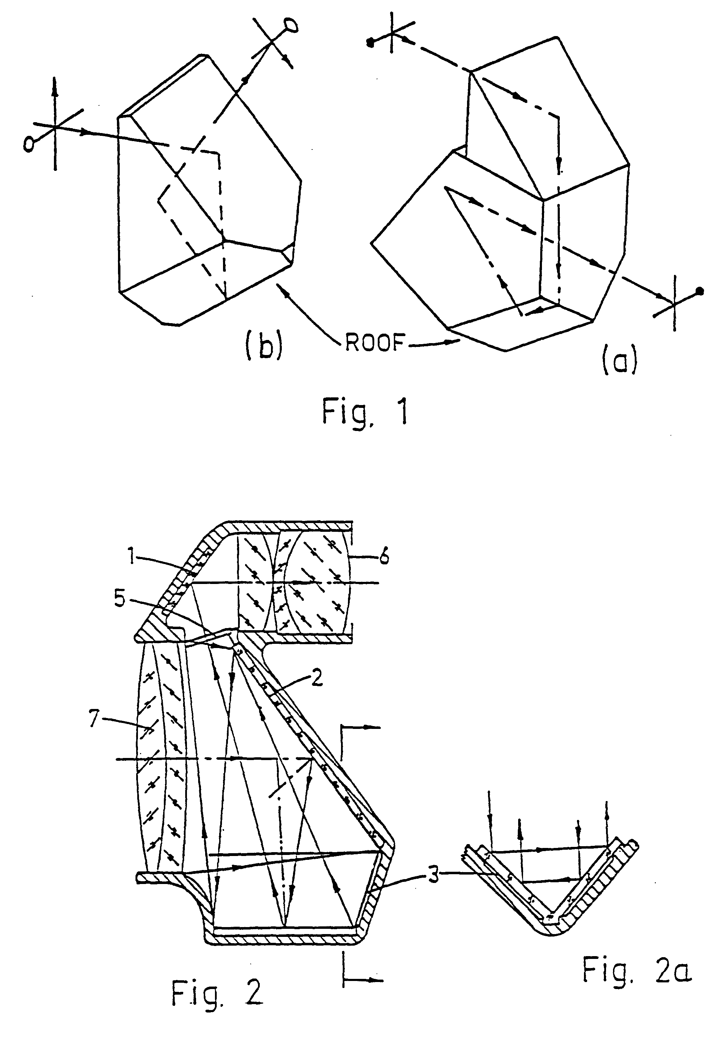

- Fig. la depicts the Hensolt prism - typical of prior art image erection system; - Fig. 1b depicts the Schmidt prism - typical of another prior art image erection system;
- Fig. 2 illustrates a cross-sectional side view of the telescope according to the invention;
- Fig. 2a shows another cross-sectional view according to the invention;
- Fig. 3 and 3a depict two cross-sectional views of a preferred embodiment of the invention having a tilted eyepiece;
- Fig. 4a shows two cross-sections of a possible focusing mechanism for the preferred embodiment of the invention of Fig. 3;
- Fig. 4b depicts a partial bottom view of the focusing mechanism;
- Fig. 5a shows a preferred embodiment of the invention, adapted for image stabilization;
- Fig. 5b shows a bottom view of mirror 2; and
- Fig. 6 is an alternative preferred embodiment of the invention.

### DETAILED DESCRIPTION OF THE INVENTION

Figs. la and 1b illustrate the structure of two prior art erecting systems of the Hensolt prism type and the Schmidt prism type. The said prisms perform an odd number of reflections as needed, but are typically large in size, and relatively heavy.

A telescope according to the invention is shown in Fig. 2. The telescope includes an eyepiece lens **6** an objective lens **7** and an image erection system which includes plane mirrors **1** and **2**, and Roof reflector **3** shown in cross section to the right of the Figure. The image erection system provides an erect image in the image plane where the field stop aperture **5** is located. The Roof reflector **3** is a of a "hollow prism" type which includes two perpendicular plane mirrors. Elements **1** and **3** may be interchanged, if desired. It is well known to those skilled in the art that the roof reflector can be either hollow - i.e., comprise planar mirrors, or solid - wherein the reflecting planes are prism's totally reflecting surfaces. The roof refelector may also be either symmetrical Amicl type - wherein the two reflecting surfaces equally share the aperture - or alternatively, comprise two successive refelecting surfaces, in the latter case it can combine one prism and one planar reflector. It is also well known that the symmetrical roof reflector is more compact but its reflecting surfaces should be very accurately perpendicular to each other, in order to eliminate double image. It is obvious that the total length of the telescope along the objective lens optical axis is very short and its volume is minimized due to exploiting the same space three times for folding the light bundle.

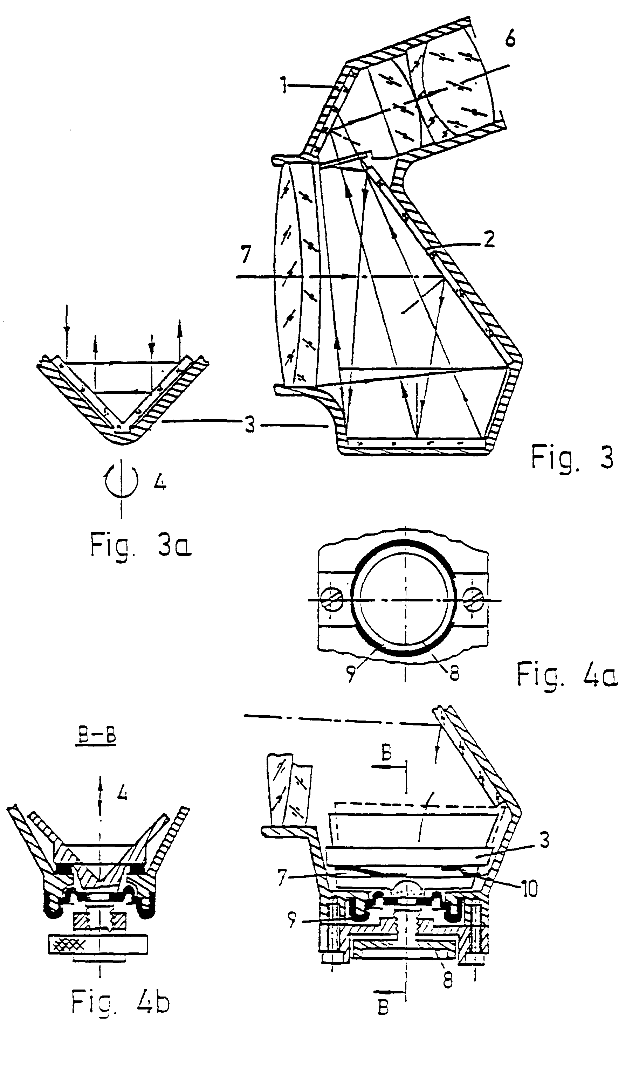

The telescope shown in Figs. 2-2a has conventional parallel optical axes for the objective and eyepiece lenses. In Figs. 3-3a another embodiment of the invention is shown, in which the optical axis of the eyepiece lens is tilted relative to the optical axis of the objective lens in order to eliminate obscuration of the natural image by the magnified image as described in an Israeli patent application number 111429 filed October 27, 1994 by the same applicant.

The telescope of the invention can employ conventional glass elements but, in weight sensitive applications, like spectacle-frame mounted binoculars, plastic lenses which are typically lighter by a factor of two are preferable. To reduce weight even further hybrid refractive-diffractive optics as described in Thomas W. Stone, "Hybrid diffractive-refractive telescope", SPIE Vol. 1212 Practical Holography IV (1990), pp. 257-266 may be used. In this technology the color correction of the lenses is obtained with no recourse to achromatic doublets and therefore with thinner lenses. For example, when adapting glass optical elements in a monocular telescope according to the invention which has a power of X6 and objective lens diameter of 25 mm the total weight of the device is approximately 50g. When the glass elements are replaced with plastic elements the weight drops to approximately 30g, and with plastic refractive-diffractive elements the weight drops down to 20g, which is approximately the weight of a single glass prescription lens.

The field of view of a Keplerian telescope is determined by the field stop aperture **5** at the image plane which is conventionally circular. It was found that for nearly all practical applications the telescope according to the invention gains several advantages if the field-of-view has a landscape rectangular shape rather than a round one:
1 - the horizontal extent of field-of-view is usually more important than of the vertical extent;
2 - the aesthetic appeal of the magnified view is higher;
3 - the total length of the telescope is even shorter;
4 - if the contour of the eyepiece is made to conform to the magnified field-of-view, the natural field-of-view obscured by the eyepiece is minimized. This is significant when the eyepiece optical axis is tilted - as shown in the device of Figs. 3-3a.

The telescope according to the invention may be typically focused by displacing the eyepiece lens assembly **6** or part of it along its optical axis by a thread mechanism. For a rectangular eyepiece, an alternative mechanism is desirable. A Preferred focusing mechanism is based on displacing reflector **3** as shown in Figs. 4-4a along axis **4** that bisects its roof angle, and which is perpendicular to its vertex line at the midpoint. A translation by f of the reflector **3** would axially shift the image plane by nearly 2f, however, since axis **4** is not parallel to the optical axis, an undesirable lateral image shift would also result. Such shift can be compensated by an angular translation component imparted to reflector **3**. The complex motion needed could, in principle, be obtained by mounting reflector **3** on a pivot axis which is impractically located external to the telescope envelope. The pivot can, however, be simulated within the telescope envelope as shown in Figs. 4-4a-4b where the focusing reflector 3 rests on a resilient mount implemented by two leaf-spring pairs **7** and **10** which are properly chosen to have different spring rates. Consequently, when a force is applied at the center of the reflector along axis **4** the two springs yield differently, resulting in a combined angular and linear displacement. In the preferred embodiment of the invention the force is applied by means of a threaded knob **8** through a flexible sealing membrane **9**. This type of focusing mechanism is insensitive to lateral tilt of the hollow roof which may result from tolerances in the leaf spring rates since the roof reflector is known to reflect light independent of a tilt in the cross-axis.

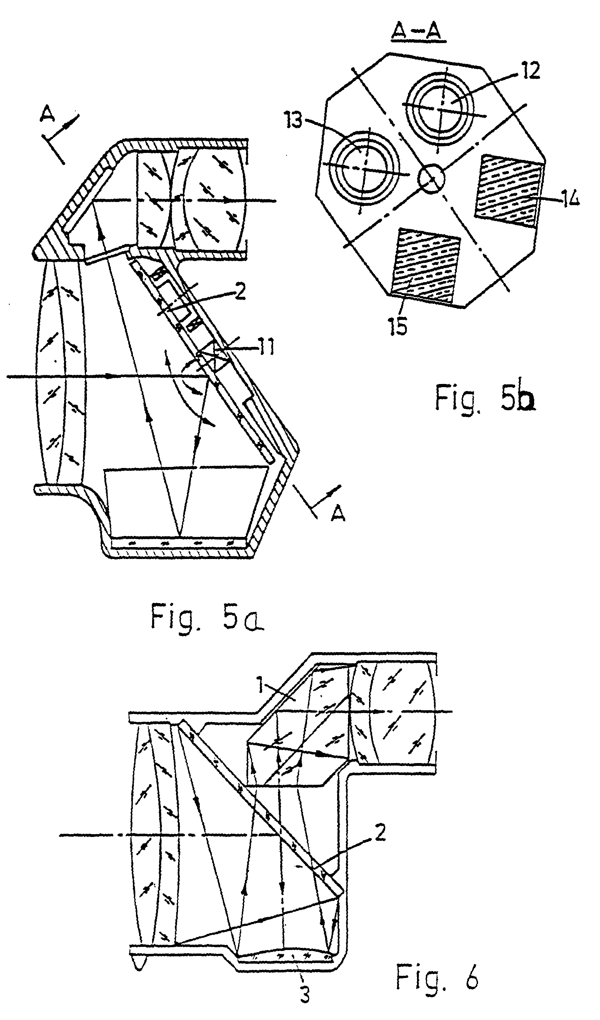

In still another embodiment of the invention, depicted in Figs. 5a-5b, a mirror **2** is mounted on a two-axis pivot mechanism **11** that is located close to the center of the reflecting plane. The angular position of mirror 2 relative to the telescope housing is controlled by command signals that are derived from two angular inertial sensors (not shown) such as solid state rate gyroscopes that are fixed to the telescope housing. Said inertial sensors sense any accidental angular motion of the telescope relative to the inertial line-of-sight and in conjunction with electromagnetic actuators **12** and **13** and capacitive deflection sensing means **14** and **15** constitute a two-axis position-servo system that controls the mirror deflection in a manner that compensates for accidental image jitters that would otherwise result. Further elaboration may be found in Yishay Netzer, "Line of sight steering and stabilization", Optical Engineering, January/February 1992, pp. 96-104.

When the telescope is employed in a stereoscopic head-mounted magnifier, such as in medical applications and the eyepiece is tilted as in Fig. 3 it was found that an image rotation is induced in each one of the individual images which make their fusion difficult and strain the observer. The reason of the image rotation was traced to the combined effect of the tilting angle of the eyepieces optical axes and the convergence angle of the objective's optical axes. A corrective image rotation may be achieved by rotating the roof-reflector **3** about axis **4** in Fig. 3 where a mechanical rotation by an angle 1/2 induces an image rotation by an angle whose magnitude and sense are selected in accordance with the desired compensation.

Fig. 6 depicts a modification of the optical layout of Fig. 2 where reflector **1** is replaced with a solid roof prism, reflector **2** has an opening and the optical axis is perpendicular to reflector **3**. This perpendicularity enables reflector **3** to be made convex, as shown, and serve as a Barlow element.

The opening in mirror **2** of Fig. 6 is effectively an obscuration to the aperture of its entrance aperture (the objective lens). This obscuration is imaged by the telescope onto its exit pupil and could pose a problem if its image extends a significant portion of the exit pupil area. However, since the opening is located close to the image plane where the cross-section of the light bundle is minimal, its extent is minimum. A basic manipulation in geometrical optics reveals that in the above premise, the diameter of the obscuration at the exit-pupil roughly equals 2F where F and are, respectively, the eyepiece focal-length, and the telescope field of view. The obscuration is thus relatively small and, since essentially the observer pupil is positioned at the telescope exit pupil, it is barely noticeable.

An extremely compact telescope is thus provided that is ideally adaptable to hand-held and spectacle-mounted binoculars as well as monoculars.

## Claims

1. A telescopic device for magnifying images comprising:
a housing for including and supporting optical components in suitable positioned relationship, said housing having an eyepiece aperture, an objective aperture, and a space for including an objective lens group (7), an eyepiece lens group (6), a converging light bundle, and a system (1, 2, 3) for folding said converging light bundle;
wherein said eyepiece lens group (6) is located along a first optical axis;
wherein said objective lens group (7) is located along a second optical axis which is slightly displaced with respect to said first optical axis;
wherein said folding system (1, 2, 3) includes a first reflecting surface (1), a second reflecting surface (2), and a roof reflector (3);
wherein the positioning of said first reflecting surface (1), said second reflecting surface (2) and said roof reflector (3) approximates the configuration of the reflecting surfaces of a Hensolt prism structure; and
wherein at least one of said first and second reflecting surfaces (1, 2) is a plane mirror.

2. A device according to claim 1, wherein the first optical axis is parallel to the second optical axis.

3. A device according to claim 1, wherein the second optical axis is tilted with respect to the first optical axis in order to provide a simultaneous view of the magnified and natural view.

4. The device according to one or more of claims 1 to 3, wherein said space substantially approximates said folded converged light bundle.

5. A device according to one or more of claims 1 to 4, wherein at least one of said objective and eyepiece lens group (7, 6) includes a diffractive lens.

6. A device according to one or more of claims 1 to 5, wherein at least said eyepiece lens group (6) has substantially a rectangular shape.

7. A device according to one or more of claims 1 to 6, further provided with focusing means (7', 8, 9, 10).

8. A device according to claim 7, wherein the focusing means (7', 8, 9, 10) comprise at least one laterally moving reflector.

9. A device according to claim 8, wherein the focusing means (7' 8, 9, 10) are hermetically sealed.

10. A device according to one or more of claims 1 to 7, further comprising means (11, 12, 13, 14, 15) for compensating for accidental image jitters.

11. A device according to claim 10, wherein the means (11, 12, 13, 14, 15) for compensating for image jitters comprise:
pivot mechanism (11) for at least one plane mirror (2);
at least one angular inertial sensor mounted on the telescope envelope; and
a servo system (12, 13, 14, 15) for adjusting the plane mirror (2) according to the data received from said inertial sensor.

12. A device according to claim 11, wherein the servo system (12, 13, 14, 15) comprises:
two electromagnetic actuators (12, 13); and
two capacitive deflection sensing means (14, 15).

13. The device according to claim 1, wherein one of said first and second reflecting surfaces is convex.

## Patentansprüche

1. Teleskopische Vorrichtung zur Vergrößerung von Bildern, die folgendes umfaßt:
ein Gehäuse zum Einschließen und Tragen von optischen Komponenten in einem passend positionierten Verhältnis, wobei das Gehäuse eine Okularöffnung, eine Objektivöffnung und einen Raum zum Einschließen einer Objektivlinsengruppe (7), einer Okularlinsengruppe (6), eines konvergierenden Lichtbündels und eines Systems (1, 2, 3) zum Falten des konvergierenden Lichtbündels aufweist;
wobei sich die Okularlinsengruppe (6) an einer ersten optischen Achse befindet;
wobei sich die Objektivlinsengruppe (7) an einer zweiten optischen Achse befindet, die in bezug auf die erste optische Achse leicht versetzt liegt;
wobei das Faltsystem (1, 2, 3) eine erste reflektierende Oberfläche (1), eine zweite reflektierende Oberfläche (2) und einen Dachreflektor (3) einschließt;
wobei sich die Positionierung der ersten reflektierenden Oberfläche (1), der zweiten reflektierenden Oberfläche (2) und des Dachreflektors (3) der Anordnung der reflektierenden Oberflächen eines Hensolt-Prismenaufbaus annähert; und
wobei mindestens eine der ersten und zweiten reflektierenden Oberflächen (1, 2) ein ebener Spiegel ist.

2. Vorrichtung nach Anspruch 1, wobei die erste optische Achse parallel zur zweiten optischen Achse liegt.

3. Vorrichtung nach Anspruch 1, wobei die zweite optische Achse in bezug auf die erste optische Achse geneigt ist, um eine gleichzeitige Ansicht der vergrößerten und der natürlichen Ansicht bereitzustellen.

4. Vorrichtung nach einem oder mehreren der Ansprüche 1 bis 3, wobei sich der Raum im wesentlichen dem gefalteten konvergierten Lichtbündel annähert.

5. Vorrichtung nach einem oder mehreren der Ansprüche 1 bis 4, wobei zumindest eine der Objektiv- und Okularlinsengruppe (7, 6) eine Beugungslinse einschließt.

6. Vorrichtung nach einem oder mehreren der Ansprüche 1 bis 5, wobei zumindest die Okularlinsengruppe (6) eine im wesentlichen rechteckige Form aufweist.

7. Vorrichtung nach einem oder mehreren der Ansprüche 1 bis 6, die weiterhin mit einem Scharfstellmittel (7', 8, 9, 10) ausgestattet wird.

8. Vorrichtung nach Anspruch 7, wobei das Scharfstellmittel (7', 8, 9, 10) mindestens einen sich seitlich bewegenden Reflektor umfaßt.

9. Vorrichtung nach Anspruch 8, wobei das Scharfstellmittel (7', 8, 9, 10) hermetisch abgedichtet ist.

10. Vorrichtung nach einem oder mehreren der Ansprüche 1 bis 7, die weiterhin ein Mittel (11, 12, 13, 14, 15) umfaßt, um ein zufälliges Bildflackern zu kompensieren.

11. Vorrichtung nach Anspruch 10, wobei das Mittel (11, 12, 13, 14, 15) zum Kompensieren des Bildflackerns folgendes umfaßt:
einen Schwenkmechanismus (11) für mindestens einen ebenen Spiegel (2);
mindestens einen Winkelträgheitssensor, der an der Teleskophülle angebracht wird; und
ein Servosystem (12, 13, 14, 15) zum Einstellen des ebenen Spiegels (2) in Übereinstimmung mit den Daten, die vom Trägheitssensor empfangen werden.

12. Vorrichtung nach Anspruch 11, wobei das Servosystem (12, 13, 14, 15) folgendes umfaßt:
zwei elektromagnetische Stellglieder (12, 13); und
zwei kapazitive Ablenkungsabtastmittel (14, 15).

13. Vorrichtung nach Anspruch 1, wobei eine der ersten oder zweiten reflektierenden Oberflächen konvex ist.

## Revendications

1. Dispositif télescopique pour agrandir des images comprenant :
un boîtier pour contenir et supporter des composants optiques suivant une relation de position appropriée, ledit boîtier ayant une ouverture d'oculaire, une ouverture d'objectif et un volume servant à contenir un groupe de lentilles d'objectif (7), un groupe de lentilles d'oculaire (6) un faisceau lumineux convergent, et un système (1, 2, 3) pour replier ledit faisceau lumineux convergent;
dans lequel ledit groupe de lentilles d'oculaire (6) est situé le long d'un premier axe optique;
dans lequel ledit groupe de lentilles d'objectif (7) est situé le long d'un deuxième axe optique qui est légèrement déplacé par rapport audit premier axe optique;
dans lequel ledit système de déviation (1, 2, 3) comprend une première surface réfléchissante (1), une deuxième surface réfléchissante (2) et un réflecteur en toit (3);
dans lequel le positionnement de ladite première surface réfléchissante (1), de ladite deuxième surface réfléchissante (2) et dudit réflecteur en toit (3) rapproche la configuration des surfaces réfléchissantes d'une structure de prisme de Hensolt; et
dans lequel au moins une desdites première et deuxième surfaces réfléchissantes (1, 2) est un miroir plan.

2. Dispositif selon la revendication 1, dans lequel le premier axe optique est parallèle au deuxième axe optique.

3. Dispositif selon la revendication 1, dans lequel le deuxième axe optique est incliné par rapport au premier axe optique afin de fournir une vue simultanée de la vue agrandie et de la vue normale.

4. Dispositif selon une ou plusieurs des revendications 1 à 3, dans lequel ledit volume s'approche sensiblement dudit faisceau lumineux convergent replié.

5. Dispositif selon une ou plusieurs des revendications 1 à 4, dans lequel au moins un desdits objectif et groupe de lentilles d'oculaire (7, 6) comprend une lentille diffractive.

6. Dispositif selon une ou plusieurs des revendications 1 à 5, dans lequel au moins ledit groupe de lentilles d'oculaire (6) a une forme sensiblement rectangulaire.

7. Dispositif selon une ou plusieurs des revendications 1 à 6, équipé de plus d'un moyen de focalisation (7', 8, 9, 10).

8. Dispositif selon la revendication 7, dans lequel le moyens de focalisation (7', 8, 9, 10) comprend au moins un réflecteur mobile latéralement.

9. Dispositif selon la revendication 8, dans lequel le moyen de focalisation (7', 8, 9, 10) est fermé hermétiquement.

10. Dispositif selon une ou plusieurs des revendications 1 à 7, comprenant de plus un moyen (11, 12, 13, 14, 15) pour compenser des sautillements accidentels de l'image.

11. Dispositif selon la revendication 10, dans lequel le moyen (11, 12, 13, 14, 15) pour compenser les sautillements de l'image comprend :
un mécanisme de pivotement (11) pour au moins un miroir plan (2);
au moins un capteur d'angle inertiel monté sur l'enveloppe du télescope; et
un système d'asservissement (12, 13, 14, 15) pour ajuster le miroir plan (2) en fonction des données reçues dudit capteur inertiel.

12. Dispositif selon la revendication 11, dans lequel le système d'asservissement (12, 13, 14, 15) comprend :
deux actionneurs électromagnétiques (12, 13); et
deux moyens de détection de déflexion capacitifs (14, 15).

13. Dispositif selon la revendication 1, dans lequel l'une desdites première et deuxième surfaces réfléchissantes est convexe.
